# EUROPÄISCHE PATENTSCHRIFT

(11) **EP 1 438 361 B1**
(45) Veröffentlichungstag und Bekanntmachung des Hinweises auf die Patenterteilung: **02.01.2008**
(21) Anmeldenummer: 02774760.9
(22) Anmeldetag: 30.10.2002
(51) Int. Cl.: C09C 1/36

(54) **BESCHICHTETE TITANDIOXID-TEILCHEN**
COATED TITANIUM DIOXIDE PARTICLES
PARTICULES DE DIOXYDE DE TITANE REVETUES

(30) Priorität: 31.10.2001 DE 10153640
(43) Veröffentlichungstag der Anmeldung: 21.07.2004
(73) Patentinhaber: Leibniz-Institut für Neue Materialien gemeinnützige GmbH, 66123 Saarbrücken (DE)
(72) Erfinder: SCHICHTEL, Martin, 66125 Saarbrücken-Dudweiler (DE)
(74) Vertreter: Barz, Peter
(86) Internationale Anmeldenummer: PCT/EP2002/012119
(87) Internationale Veröffentlichungsnummer: WO 2003/037994

(56) Entgegenhaltungen:
- EP-A- 0 401 045
- DE-A- 19 859 852
- FR-A- 2 782 520
- GB-A- 1 256 421

## Beschreibung

Die vorliegende Erfindung betrifft ein Verfahren zur Herstellung von mit einem Oxid, Hydroxid oder Oxidhydroxid von Al, Ce, Zr und/oder Si beschichteten nanoskaligen Titandioxid-Teilchen oder einer Suspension davon, wobei daraus erhältliche beschichtete Titandioxid-Teilchen einen mittleren Teilchendurchmesser von unter 50 nm aufweisen können.

Titandioxid-Pulver werden großtechnisch eingesetzt, z.B. als Pigmente oder als UV-Absorber. Um Titandioxid auch bei Anwendungen einsetzen zu können, in denen Transparenz erforderlich ist, z.B. als UV-Absorber in transparenten Schichten, sind sehr feine Teilchen notwendig. Die Herstellung sehr kleiner Teilchen mit Abmessungen im Nanometerbereich ist bekannt. So wird in der DE-A-198 59 852 ein Verfahren zur Herstellung einer Suspension von Rutilteilchen beschrieben, deren zahlenmittlerer Teichendurchmesser unter 20 nm liegt.

Titandioxid besitzt außerdem die Eigenschaft photokatalytisch aktiv zu sein. Es kann unter Einwirkung von Licht z.B. Zersetzungsreaktionen katalysieren. Daher können Titandioxid-Teilchen im allgemeinen nicht in eine transparente organische Matrix eingebettet werden, da die Matrix bei Lichteinwirkung durch den Photokatalyse-Effekt zerstört wird.

Zur Vermeidung oder Verminderung dieses Effekts können Titandioxid-Teilchen beschichtet bzw. umhüllt werden. Dadurch können die für die katalytische Wirkung verantwortlichen Vorgänge von der organischen Matrix abgeschirmt werden. Dieses Beschichtungsverfahren wird auch als "Coating" bezeichnet. Damit das beschichtete Titandioxid die gewünschten Funktionen wie UV-Absorption beibehält soll die Beschichtung für das entsprechende Licht durchlässig sein. Im allgemeinen werden Oxide von Silicium, Aluminium, Zirkon oder Cer als Beschichtung aufgebracht.

Beispielsweise beschreiben D.N. Furlong, K.S.W. Sing und G.D. Parfitt in J. Coll. Inert. Sci, 1979, 69, 409 ein Coating-Verfahren, bei dem eine saure Rutil-Suspension mit Natriumsilicat versetzt wird und die Suspension dann angesäuert, gerührt und filtriert wird. Es werden beschichtete Teilchen von 200 bis 500 nm erhalten. Nach R.E. Day, T.A. Eggerton, Coll. and Surf., 23, 1987, 137, erfolgt ein Beschichtung durch Zugabe von Aluminiumsulfat zu einer sauren Suspension von Rutil-Teilchen, Neutralisieren mit einer Base wie Ammoniak oder Natronlauge, Filtrieren und Trocknen.

Alle bekannten Verfahren führen aber für Teilchen im nanoskaligen Bereich nur zu unregelmäßigen Beschichtungen mit ungleichmäßiger Dicke. Liegen Beschichtungsstellen mit zu geringer Dicke oder unbedeckte Stellen vor, sind eine Abschirmung und damit eine Verhinderung oder Verminderung des Photokatalyse-Effekts nicht mehr gewährleistet. Wird eine größere Menge an Beschichtungsmaterial verwendet ergibt sich andererseits eine Agglomeration oder Aggregation der Teilchen. Es bilden sich z.B. Aggregate von Teilchen, die durch das Beschichtungsmittel miteinander verbunden sind. Beschichtete Titandioxid-Teilchen mit Abmessungen, die bei transparenten Anwendungen erforderlich sind, lassen sich nach dem Stand der Technik nicht herstellen, da beschichtete Titandioxid-Teilchen nach dem Stand der Technik einen mittleren Durchmesser von über 150 nm besitzen.

EP-A-0401045 betrifft farbige Pigmente auf Titandioxid-Basis. Die TiO₂-Teilchen mit einer mittleren Teilchengröße von 0,01 bis 0,1 µm werden mit einem Metalloxid von Ni, Co, Ce, Cu, Cr, Mn, V, W oder Mischungen davon beschichtet.

FR-A-2782520 beschreibt UV-Schutzmittel aus Titandioxidteilchen mit einer mittleren Größe von höchstens 80 nm, wobei die Teilchen mit Siliciumoxid, Silicoaluminat oder Aluminiumoxid beschichtet sind.

Die Aufgabe der vorliegenden Erfindung besteht in der Bereitstellung eines Verfahrens zur Beschichtung nanoskaliger Titandioxid-Teilchen, durch das beschichtete Titandioxid-Teilchen mit einer zahlenmittleren Teilchengröße von unter 50 nm und kleiner mit einem effektiven Schutz bezüglich der Photokatalyse erhalten werden können, um Titandioxid-Teilchen für transparente Anwendungen in einer organischen Matrix einsetzen zu können. Hierfür ist eine regelmäßige Beschichtung erforderlich.

Die Aufgabe wird erfindungsgemäß gelöst durch ein Verfahren zur Herstellung von mit einem Oxid, Hydroxid oder Oxidhydroxid von Al, Ce, Zr und/oder Si beschichteten nanoskaligen Titandioxid-Teilchen oder einer Suspension davon, in welchem eine oder mehrere Verbindungen von Al, Ce, Zr und/oder Si oder Mischungen davon als Vorstufe des Beschichtungsmaterials in einer Suspension der Titandioxid-Teilchen, die gegebenenfalls oberflächenmodifiziert sind, mit Urease und Harnstoff als enzymatischem Fällungsmittelsystem unter Bildung eines Überzugs aus einem Oxid, Hydroxid oder Oxidhydroxid von Al, Ce, Zr und/oder Si auf den Titandioxid-Teilchen gefällt werden, die Suspension dann gegebenenfalls hydrothermal behandelt wird und die gebildeten beschichteten Titandioxid-Teilchen gegebenenfalls aus der Suspension abgetrennt werden.

Durch das erfindungsgemäße Verfahren lassen sich erstmals entsprechend beschichtete Titandioxid-Teilchen mit einer mittleren Teilchengröße unter 50 nm und darunter herstellen. Mit dem erfindungsgemäßen Verfahren können regelmäßig beschichtete Titandioxid-Teilchen, d.h. mit einer im wesentlichen gleichmäßigen Beschichtungsdicke, erhalten werden.

Titandioxid kommt als Brookit, Anatas und Rutil vor. Für diese Erfindung sind Anatas und insbesondere Rutil bevorzugt. Für das erfindungsgemäße Verfahren werden Suspensionen von nanoskaligen Titandioxid-Teilchen eingesetzt. Es handelt sich insbesondere um wäßrige Suspensionen. Gegebenenfalls kann dem als Suspensionsmittel bevorzugten Wasser ein organisches Lösungsmittel wie ein Alkohol zugesetzt werden. Dies ist aber nicht bevorzugt.

Die nanoskaligen Teilchen weisen insbesondere eine zahlenmittlere Teilchengröße bzw. einen zahlenmittleren Teilchendurchmesser von unter 100 nm, bevorzugt unter 30 nm und bevorzugter unter 20 nm oder sogar unter 10 nm auf. Sofern nicht anders angegeben beziehen sich hier und im folgenden die Angaben zur mittleren Teilchengröße (zum mittleren Teilchendurchmesser) der Teilchen und der beschichteten Teilchen auf das Zahlenmittel (d₅₀-Wert), wobei keine Unterscheidung zwischen Primärteilchen und Sekundärteilchen (Agglomeraten) erfolgt. Die Teilchengröße kann durch Lichtstreuung, z.B. durch Laserlichtrückstreung, bestimmt werden. Die Primärteilchengröße der Teilchen läßt sich z.B. durch Röntgendiffraktometrie bestimmen.

Besonders bevorzugt werden Suspensionen von Titandioxid-Teilchen verwendet, die nach dem Verfahren der DE-A-198 59 852 herstellbar sind. Danach werden wäßrige Suspensionen von Rutil-Teilchen vorzugsweise durch Einbringen von fein verteiltem Titantetrachlorid in Salzsäure erhalten. Hierfür wird flüssiges Titantetrachlorid als zerstäubtes Aerosol in Salzsäure eingestäubt. Zur Dispergierung kann eine Zweistoffdüse, wie ein Crossflow-Zerstäuber, eine Hohlkegeldüse oder ein Ultraschall-Zerstäuber, verwendet werden. Die erhaltene Lösung wird bevorzugt einer Wärmebehandlung unterzogen. Es werden Suspensionen erhalten, die Rutil-Teilchen mit einem zahlenmittleren Teilchendurchmesser von unter 20 nm enthalten.

Zur Stabilisierung der Titandioxid-Teilchen im Hinblick auf pH-Bereiche, die im erfindungsgemäßen Verfahren zweckmäßig sind, ist es besonders bevorzugt, daß die Titandioxid-Teilchen vor dem Beschichtungsvorgang oberflächenmodifiziert werden. Die Oberflächenmodifikation kann nach den üblichen Verfahren nach dem Stand der Technik durchgeführt werden. Als Oberflächenmodifizierungsmittel eignen sich z.B. Diphosphate, Polyphosphate, Polyvinylalkohol, wie Mowiol® von BASF, z.B. Mowiol 4/88, Polyvinylpyrrolidon und Methylvinylether-Maleinsäureanhydrid-Copolymere, wie Gantrez® AN-Copolymere von Ciba. Ein bevorzugtes Oberflächenmodifizierungsmittel ist Polyvinylalkohol.

Die Oberflächenmodifizierung erfolgt üblicherweise durch Zugabe des Oberflächenmodifizierungsmittels zur wäßrigen Suspension der Titandioxid-Teilchen, Rühren für eine gewisse Zeit, so daß eine Adsorption der Oberflächenmodifizierungsmittel erfolgt, und Abtrennen der oberflächenmodifizierten Teilchen, z.B. durch Filtrieren. Der Rührvorgang kann bei Raumtemperatur oder in der Nähe davon, z.B. bei 15 bis 40°C, und über einen Zeitraum von 1 h bis 48 h oder 3 h bis 10 h erfolgen. Als Suspension kann z.B. eine 0,1 bis 10 gew.-%ige Titandioxid-Teilchen-Suspension verwendet werden. Das Oberflächenmodifizierungsmittel wird z.B. in einer Menge von 0,1 bis 10 Gew.-%, bezogen auf die Titandioxid-Teilchen, eingesetzt.

Als eine oder mehrere Verbindungen von Al, Ce, Zr oder Si, die als Vorstufe des Beschichtungsmaterials verwendet werden, eignen sich alle Verbindungen, mit denen Hydroxide, Oxide oder Oxidhydroxide von Al, Ce, Zr und/oder Si gefällt werden können. Es können Mischungen von Verbindungen eingesetzt werden, besonders bevorzugt wird aber nur eine Verbindung eingesetzt. Die Verbindungen werden der Suspension der Titandioxid-Teilchen zugesetzt. Dabei werden die Verbindungen bevorzugt zunächst in Wasser dispergiert oder vorzugsweise gelöst und diese Lösung oder Dispersion wird dann zur Suspension der Titandioxid-Teilchen gegeben.

Bei den Verbindungen oder Salzen handelt es sich bevorzugt um Nitrate, Sulfate, Halogenide (z.B. Chlorid oder Bromid), Dihydrogenphosphate, Hydrogenphosphate oder Phosphate von Al, Ce, Zr (bzw. ZrO²⁺) oder Si, wobei Aluminiumsalze besonders bevorzugt sind. Es kann sich aber auch um Salze der Kieselsäure, wie Natrium- oder Kaliumsilicate (Wasserglas), oder um Salze von Aluminaten handeln, z.B. Natrium- oder Kaliumaluminate. Die eingesetzten Verbindungen können hydrathaltig oder hydratfrei sein.

Konkrete Beispiele sind Aluminiumsulfat, wie Al₂(SO₄)₃ x 16H₂O, Aluminiumchlorid, wie AlCl₃ x 6H₂O, Aluminiumnitrat, wie Al(NO₃)₃ x 9H₂O, Aluminiumphosphate, wie Al(H₂PO₄)₃, Natriumsilicat, ZrO(NO₃)₂, ZrCl₄, CeCl₃ oder Cersulfat, wie Ce(SO₄)₂ x 4H₂O. Besonders bevorzugt sind Aluminiumsulfat, Aluminiumchlorid und Cerchlorid, wobei Aluminiumsulfat ganz besonders bevorzugt ist.

Verbindungen von Al, Ce, Zr oder Si sind bevorzugt, die im sauren wasserlöslich sind, d.h. in wäßriger Lösung bei einem pH-Wert unter 4 keine Niederschläge zeigen. Weiter sind Verbindungen bevorzugt, deren Fällung (der Hydroxide/Oxide) bei einem pH-Wert von nicht mehr als 9 vervollständigt werden kann. Der Fällungsbereich der eingesetzten Verbindung sollte mit anderen Worten im pH-Bereich von 4 bis 9 liegen.

Zur Durchführung der Fällung wird ein enzymatisches Fällungsmittelsystem verwendet, nämlich eine Kombination von Urease und Harnstoff. Das Enzym ist ab einem pH-Wert von etwa 4 in der Lage, aus dem Harnstoff Ammoniak freizusetzen und dadurch den pH-Wert anzuheben. Durch die Erhöhung des pH-Wertes wird die Fällung eingeleitet. Die Fällung kann gestartet werden, indem z.B. der pH-Wert einer wäßrigen Suspension, in der alle Bestandteile enthalten sind, also gegebenenfalls oberflächenmodifizierte Titandioxid-Teilchen, die gelöste Al-, Ce-, Zr- oder Si-Verbindung und das Fällungsmittelsystem, durch Zugabe einer Base wie Ammoniak auf einen pH-Wert von 4 oder darüber angehoben wird oder zu der sonst vollständigen Suspension, die auf einen pH-Wert von 4 oder darüber eingestellt ist, eine noch fehlende Komponente des Fällungsmittelsystems (Urease oder Harnstoff) zugesetzt wird.

Die Fällungsparameter wie Reaktionsdauer, Steuerbarkeit des pH-Wertes und pH-Endwert lassen sich bei dem System Urease/Harnstoff gut einstellen. Der pH-Wert der Suspension beträgt beim Start des Fällungsverfahrens vorzugsweise etwa 4. Zweckmäßigerweise wird bei etwa Raumtemperatur gearbeitet, bevorzugt ist eine Temperatur von ca. 25°C. Die Dauer der Fällung läßt sich durch das Verhältnis der Menge von Urease zu Harnstoff z. B. auf 30 s bis 1 h einstellen. Geeigneterweise werden 1 bis 5 g Harnstoff pro 0,05 g Urease eingesetzt. Der zu erreichende pH-Endwert läßt sich durch die Konzentration der Urease einstellen. Die Menge an Harnstoff wird so gewählt, daß bei Anwesenheit der geeigneten Menge Urease genügend Ammoniak freigesetzt wird, um den gewünschten pH-Endwert zu erreichen.

Die Fällung kann direkt oder gegebenenfalls nach einer Wärmebehandlung zu einer kristallinen Beschichtung führen. Bei der Fällung von CeCl₃ wird z.B. direkt kristallines Ceroxid als Beschichtung gebildet. Eine Wärmebehandlung ist dann nicht notwendig. Insbesondere bei Al-Verbindungen erhält man aber meist einen amorphen, gegebenenfalls wasserhaltigen Hydroxid-Überzug. Nach der Fällung erfolgt daher bevorzugt eine Wärmebehandlung und insbesondere eine Hydrothermal-Behandlung der erhaltenen Suspension, vor allem wenn sich nach der Fällung ein amorpher Überzug gebildet hat.

Unter einer Hydrothermal-Behandlung versteht man eine Wärmebehandlung einer wäßrigen Lösung oder Suspension unter Druck, z.B bei einer Temperatur über 100°C und einem Druck über 1 bar. Durch diese Behandlung kann das gefällte Hydroxid, Oxid oder Oxidhydroxid in die gewünschte Modifikation überführt werden. Die geeigneten Bedingungen lassen sich z.B. aus einem Phasendiagramm ermitteln. Zur Bildung von Böhmit aus gefälltem, amorphem Aluminiumhydroxid ist z.B. eine Hydrothermal-Behandlung über etwa 6 h bei etwa 210°C und etwa 30 bar geeignet.

Unter einem Oxid, Hydroxid oder Oxidhydroxid von Al, Ce, Zr und/oder Si werden die Sauerstoff-haltigen Verbindungen in den möglichen Oxidationsstufen der Elemente verstanden. Unter den Oxidhydroxiden werden insbesondere auch alle Übergangsstufen zwischen den Oxiden und Hydroxiden verstanden. Oxidhydroxide werden manchmal auch als Metahydroxide bezeichnet. So nennt man Böhmit (AIO(OH)) auch Aluminiummetahydroxid. Selbstverständlich können auch Verunreinigungen, z.B. Gegenionen aus den für die Vorstufe eingesetzten Verbindungen, Wassermoleküle usw., vorhanden sein.

Nach der Hydrothermal-Behandlung erhält man vorzugsweise das im wesentlichen kristalline Oxid oder Oxidhydroxid der genannten Elemente. Die Hydrothermal-Behandlung führt im allgemeinen zu einer Verdichtung und "Entwässerung" der amorphen Schicht, wobei sich kristalline Modifikationen der Oxide oder Oxidhydroxide bilden. Besonders bevorzugt ist eine Beschichtung aus Böhmit (kristallines AIO(OH)).

Die beschichteten Teilchen können in Form der Suspension verwendet werden. Die Suspension kann auch durch Einengen konzentriert werden. Die beschichteten Teilchen können auch als Pulver, zum Beispiel durch Abdampfen des Wassers oder Filtrieren und Trocknen, isoliert werden.

Aus vereinfachten theoretischen Überlegungen läßt sich ungefähr die notwendige Menge an Beschichtungsmaterial ermitteln, um die Oberfläche der Teilchen mit einer monomolekularen Schicht zu belegen. Im allgemeinen wird die Menge an Al-, Si-, Ce- und/oder Zr-Verbindung so gewählt, daß eine Beschichtung, z.B. eine Böhmit-Beschichtung, von 0,1 Gew.-% bis 10 Gew.-%, bevorzugt 3 Gew.-% bis 10 Gew.-%, bevorzugter 5 Gew.-% bis 10 Gew.-%, bezogen auf Titandioxid, erhalten wird, woraus sich unter Annahme einer gleichmäßigen Beschichtung Beschichtungsdicken von 0,2 bis 1,2 nm berechnen lassen. Die zahlenmittlere Teilchengröße der beschichteten Teilchen ist bevorzugt unter 50 nm.

Für den Schutz der Matrix vor Zersetzungsreaktionen ist ein Bedeckungsgrad der Teilchen durch die Beschichtung von 100 % ideal. Ein effektiver Schutz kann aber auch erhalten werden, wenn die frei zugängliche Titandioxid-Oberfläche nur durch sehr kleine Poren und Kanäle mit der Matrix verbunden ist. Bei 0,1 Gew.-% bis 10 Gew.-% Böhmit-Beschichtung, bezogen auf die Titandioxid-Teilchen, läßt sich ein Bedeckungsgrad von 0,97 bis 1,25 berechnen, d.h. bei 0,1 Gew.-% Coating sind 3 % der Oberfläche noch unbedeckt.

Die erfindungsgemäß erhaltene Beschichtung ist so gleichmäßig, daß selbst bei 0,1 Gew.-% Beschichtung (theoretischer Bedeckungsgrad 0,97) bereits eine merklicher Schutz vor der photokatalytischen Aktivität erreicht wird. Schon ab einer Beschichtung von 5 Gew.-% bezogen auf die Titandioxid-Teilchen ergibt sich ein praktisch vollständiger Schutz bezüglich der photokatalytischen Aktivität, so daß solche Teilchen, abgesehen von eventuellen, nicht störenden Poren oder Kanälen, vollständig von der Beschichtung umhüllt sind. Die eventuell vorhandenen Poren oder Kanäle sind zu klein, um den für die Photokatalyse notwendigen Kontakt der Reaktionspartner zu ermöglichen. Die praktisch ermittelte Bedeckung entspricht also fast der Theorie, was darauf schließen läßt, daß erfindungsgemäß eine sehr gleichmäßige Beschichtung erhalten wird.

Nach dem erfindungsgemäßen Verfahren können Teilchen mit einer Beschichtung von 0,1 bis 10 Gew.-%, bezogen auf Titandioxid, erhalten werden, die einen zahlenmittleren Durchmesser von unter 50 nm und sogar unter 40 nm, z.B. 20 bis 50 und insbesondere 30 bis 40 nm, aufweisen, so daß sie auch für transparente Anwendungen geeignet sind. Die beschichteten Teilchen eignen sich daher insbesondere als UV-Absorber für eine transparente organische Matrix.

Die folgenden Beispiele erläutern die Erfindung, ohne sie zu beschränken.

### Beispiel 1

Die Teilchen werden nach dem in DE-A-198 59 852 beschriebenen Verfahren hergestellt. Ein Cross-Flow-Zerstäuber wird in ein 500 ml Planschliffgefäß eingeführt, in dem 100 ml entionisiertes Wasser enthalten sind, das mit HCl auf einen pH-Wert von 2 eingestellt ist. Der Zerstäuber befindet sich über der Wasseroberfläche. In einen vor Luftfeuchtigkeit geschützten Meßzylinder werden 5 ml Titantetrachlorid unter Inertgas eingefüllt. Das Titantetrachlorid wird mit einer Peristaltikpumpe mit einer Geschwindigkeit von 10 ml/h in die Zerstäuberdüse transportiert. Dort trifft es auf Trockenluft mit einem Druck von ca. 3 bar. Dadurch wird Titantetrachlorid im Planschliffgefäß vernebelt und im vorgelegten Wasser dispergiert. Die erhaltene Suspension der Teilchen kann ohne weitere Aufbereitung, nach Konzentrieren oder nach vollständigem Einengen unter Bildung eines Pulvers verwendet werden. Es werden redispergierbare Rutil-Teilchen mit einem zahlenmittleren Durchmesser d₅₀ unter 10 nm (ca. 6 nm) erhalten.

1 g der erhaltenen n-Rutil-Teilchen wird in 100 ml entionisiertem Wasser dispergiert. Die Suspension wird mit 1 Gew.-% PVA (Moviol® 4/88), bezogen auf das Rutil, versetzt und 30 min gerührt. In einem zweiten Gefäß werden 0,26 g (0,42 mmol) Al₂(SO₄)₃ x 16H₂O in 10 ml entionisiertem Wasser gelöst und mit 0,05 g Urease versetzt. Diese Lösung wird zur Rutil-Suspension titriert, wobei der pH-Wert mit einer 20 %igen Ammoniak-Lösung bei 4,5 gehalten wird. Danach werden 5,0 g (0,083 mol) Harnstoff zugegeben. Nach 30 min ergibt sich ein pH-Wert von ca. 8 bis 8,5. Die Suspension wird 6 h bei 220°C im Druckaufschluß nachbehandelt. Durch die Hydrothermal-Behandlung wird der amorphe Hydroxid-Coating in eine kristalline Phase, Böhmit, überführt.

Die Teilchengröße und deren Verteilung werden mit einem Ultrafine Particle Analyzer der Grimm Labortechnik GmbH bestimmt, der mit Laserstrahl-Beugung und -Reflexion arbeitet und einen Meßbereich von 3 nm bis 6 µm aufweist. Es ergibt sich ein zahlenmittlerer Durchmesser von 35 nm. Der Anteil der Böhmit-Beschichtung beträgt etwa 5 Gew.-% bezogen auf Rutil. Der relative Bedeckungsgrad beträgt 1,18. Aus HTEM-Aufnahmen ergibt sich eine mittlere Beschichtungsdicke von 0,7 nm.

### Beispiel 2

Es wird wie in Beispiel 1 gearbeitet, wobei statt Aluminiumsulfat 0,58 mmol CeCl₃ verwendet werden. Ohne Hydrothermal-Behandlung werden Rutil-Teilchen erhalten, die mit kristallinem Ceroxid beschichtet sind.

### Beispiel 3

Es wird wie in Beispiel 1 gearbeitet, wobei 0,010, 0,040, 0,085, 0,415 bzw. 0,835 mmol Al₂(SO₄)₃ x 16H₂O verwendet werden, so daß eine Böhmit-Beschichtung von 0,1, 0,5, 1,0, 5,0 bzw. 10,0 Gew.-% bezogen auf Rutil erhalten wird. Bei allen Proben werden für die beschichteten Teilchen mittlere Durchmesser unter 50 nm erhalten. Die photokatalytische Aktivität der beschichteten Teilchen wird mit der der unbeschichteten Teilchen verglichen. Hierfür wird der photokatalytische Abbau von Murexid durch die jeweiligen Teilchen im UVNIS-Spektrum bestimmt.

Während Murexid durch unbeschichtetes Rutil bei dem gewählten Versuchsaufbau innerhalb von 60 min vollständig zersetzt wird, sind bei 0,1 und 1 Gew.-% Böhmit-Coating nach 120 min nur 70 bzw. 30 % Murexid zersetzt, so daß bereits hier ein merklicher Schutz vorliegt. Bei 5 und 10 Gew.-% Böhmit-Coating ist nach 120 min kein Abbau des Farbstoffs feststellbar.

## Patentansprüche

1. Verfahren zur Herstellung von mit einem Oxid, Hydroxid oder Oxidhydroxid von Al, Ce, Zr und/oder Si beschichteten nanoskaligen Titandioxid-Teilchen oder einer Suspension davon, in welchem eine oder mehrere Verbindungen von Al, Ce, Zr oder Si oder Mischungen davon als Vorstufe des Beschichtungsmaterials in einer Suspension der Titandioxid-Teilchen, die gegebenenfalls oberflächenmodifiziert sind, mit Urease und Harnstoff als enzymatischem Fällungsmittelsystem unter Bildung eines Überzugs aus einem Oxid, Hydroxid oder Oxidhydroxid von Al, Ce, Zr und/oder Si auf den Titandioxid-Teilchen gefällt werden, die Suspension dann gegebenenfalls hydrothermal behandelt wird und die gebildeten beschichteten Titandioxid-Teilchen gegebenenfalls aus der Suspension abgetrennt werden.

2. Verfahren nach Anspruch 1, **dadurch gekennzeichnet, dass** die Suspension nach der Fällung einer Hydrothermal-Behandlung unterworfen wird.

3. Verfahren nach Anspruch 1 oder Anspruch 2, **dadurch gekennzeichnet, dass** die Fällung bei einem pH-Wert nicht unter 4 erfolgt.

4. Verfahren nach einem der Ansprüche 1 bis 3, **dadurch gekennzeichnet, dass** als Vorstufe Aluminiumsulfat, Aluminiumchlorid oder Cerchlorid verwendet wird.

5. Verfahren nach irgendeinem der vorhergehenden Ansprüche, **dadurch gekennzeichnet, dass** die beschichteten Teilchen einen zahlenmittleren Teilchendurchmesser von unter 50 nm aufweisen.

6. Verfahren nach irgendeinem der vorhergehenden Ansprüche, **dadurch gekennzeichnet, dass** die beschichteten Teilchen einen zahlenmittleren Teilchendurchmesser von unter 40 nm aufweisen.

7. Verfahren nach irgendeinem der vorhergehenden Ansprüche, **dadurch gekennzeichnet, dass** die Titandioxid-Teilchen Rutil-Teilchen sind.

8. Verfahren nach irgendeinem der vorhergehenden Ansprüche, **dadurch gekennzeichnet, dass** eine Beschichtung aus einem Aluminiumoxid oder Aluminiumoxidhydroxid gebildet wird.

9. Verfahren nach irgendeinem der vorhergehenden Ansprüche, **dadurch gekennzeichnet, dass** eine Beschichtung aus Böhmit gebildet wird.

10. Verfahren nach irgendeinem der vorhergehenden Ansprüche, **dadurch gekennzeichnet, dass** die Beschichtungsmenge der gebildeten Teilchen, bezogen auf Titandioxid, 0,1 bis 10 Gew.-%, vorzugsweise 5 bis 10 Gew.-%, beträgt.

## Claims

1. A process for preparing nanoscale titanium dioxide particles coated with an oxide, hydroxide or oxide hydroxide of Al, Ce, Zr and/or Si, or a suspension thereof, by precipitating one or more compounds of Al, Ce, Zr or Si or mixtures thereof, as a precursor of the coating material, in a suspension of the titanium dioxide particles which have optionally been surface-modified, with urease and urea as an enzymatic precipitant system to form a coating composed of an oxide, hydroxide or oxide hydroxide of Al, Ce, Zr and/or Si on the titanium dioxide particles, then optionally hydrothermally treating the suspension and optionally removing the coated titanium dioxide particles formed from the suspension.

2. The process of claim 1, **characterized in that** the suspension is subjected to a hydrothermal treatment after the precipitation.

3. The process of claim 1 or claim 2, **characterized in that** the precipitation is effected at a pH which is not below 4.

4. The process of any one of claims 1 to 3, **characterized in that** the precursor used is aluminum sulfate, aluminum chloride or cerium chloride.

5. The process of any one of the preceding claims, **characterized in that** the coated particles have a number-average particle diameter of below 50 nm.

6. The process of any one of the preceding claims, **characterized in that** the coated particles have a number-average particle diameter of below 40 nm.

7. The process of any one of the preceding claims, **characterized in that** the titanium dioxide particles are rutile particles.

8. The process of any one of the preceding claims, **characterized in that** the coating is formed of aluminum oxide or aluminum oxide hydroxide.

9. The process of any one of the preceding claims, **characterized in that** the coating is formed of boehmite.

10. The process of any one of the preceding claims, **characterized in that** the amount of coating of the formed particles based on titanium dioxide is from 0.1 to 10% by weight, preferably from 5 to 10% by weight.

## Revendications

1. Procédé de préparation de particules nanométriques de dioxyde de titane, enrobées d'un oxyde, hydroxyde ou oxyde-hydroxyde d'aluminium, de cérium, de zirconium et/ou de silicium, ou d'une suspension de telles particules, dans lequel procédé l'on fait précipiter un ou plusieurs composés d'aluminium, de cérium, de zirconium ou de silicium ou un mélange de tels composés, servant de précurseurs du matériau d'enrobage, dans une suspension de particules de dioxyde de titane qui ont éventuellement subi une modification de leur surface, à l'aide d'uréase et d'urée servant de système enzymatique d'agents de précipitation, ce qui aboutit à la formation, sur les particules de dioxyde de titane, d'un enrobage formé d'un oxyde, hydroxyde ou oxyde-hydroxyde d'aluminium, de cérium, de zirconium et/ou de silicium, on fait ensuite, éventuellement, subir à la suspension un traitement hydrothermique et l'on sépare ensuite de la suspension, éventuellement, les particules de dioxyde de titane enrobées ainsi obtenues.

2. Procédé conforme à la revendication 1, **caractérisé en ce que** l'on fait subir à la suspension, après la précipitation, un traitement hydrothermique.

3. Procédé conforme à la revendication 1 ou 2, **caractérisé en ce que** l'on effectue la précipitation à un pH d'au moins 4.

4. Procédé conforme à l'une des revendications 1 à 3, **caractérisé en ce que** l'on emploie, en tant que précurseur, du sulfate d'aluminium, du chlorure d'aluminium ou du chlorure de cérium.

5. Procédé conforme à l'une des revendications précédentes, **caractérisé en ce que** les particules enrobées présentent un diamètre moyen en nombre de moins de 50 nm.

6. Procédé conforme à l'une des revendications précédentes, **caractérisé en ce que** les particules enrobées présentent un diamètre moyen en nombre de moins de 40 nm.

7. Procédé conforme à l'une des revendications précédentes, **caractérisé en ce que** les particules de dioxyde de titane sont des particules de rutile.

8. Procédé conforme à l'une des revendications précédentes, **caractérisé en ce que** l'enrobage formé est constitué d'un oxyde d'aluminium ou d'un oxyde-hydroxyde d'aluminium.

9. Procédé conforme à l'une des revendications précédentes, **caractérisé en ce que** l'enrobage formé est constitué de boehmite.

10. Procédé conforme à l'une des revendications précédentes, **caractérisé en ce que** l'enrobage des particules obtenues représente 0,1 à 10 % et de préférence 5 à 10 % du poids de dioxyde de titane.
